# EUROPÄISCHE PATENTSCHRIFT

(11) **EP 4 490 413 B1**
(45) Veröffentlichungstag und Bekanntmachung des Hinweises auf die Patenterteilung: **21.01.2026**
(21) Anmeldenummer: 23709626.8
(22) Anmeldetag: 02.03.2023
(51) Int. Cl.: F16D 65/16, F16D 63/00, F16D 59/02, F16D 121/22

(54) **BREMSEINRICHTUNG FÜR EINE BERGBAUMASCHINE**
BRAKE DEVICE FOR A MINING MACHINE
DISPOSITIF DE FREIN POUR MACHINE D'EXPLOITATION MINIÈRE

(30) Priorität: 10.03.2022 DE 102022105637
(43) Veröffentlichungstag der Anmeldung: 15.01.2025
(73) Patentinhaber: Olko-Maschinentechnik GmbH, 59399 Olfen (DE)
(72) Erfinder: KRIUKOV, Konstantin, 59399 Olfen (DE)
(74) Vertreter: Kohlmann, Kai
(86) Internationale Anmeldenummer: PCT/EP2023/055359
(87) Internationale Veröffentlichungsnummer: WO 2023/169933

(56) Entgegenhaltungen:
- DE-A1- 102013 014 845

## Beschreibung

Die Erfindung betrifft eine Bremseinrichtung für eine Bergbaumaschine umfassend
- mindestens eine Bremsfläche,
- mindestens zwei paarweise an einem Bremsgestell befestigte Bremselemente, die gleichzeitig auf die Bremsfläche einwirken,
- eine an jedem Bremselement angeordnete Bremslüftungsvorrichtung, wobei jedes Bremselement eine axial in Richtung der Bremsfläche wirkende Bremskraft auf einen Bremsbelag und jede Bremslüftungsvorrichtung eine der Bremskraft entgegengesetzte Kraft zum Lüften des Bremsbelags erzeugt.

Bremseinrichtungen für den Bergbau müssen insbesondere den spezifischen Anforderungen der TAS (Technische Anforderungen an Schacht- und Schrägförderanlagen) sowie der BVOS (Bergverordnung für Schacht- und Schrägförderanlagen) entsprechen.

Bekannte Bremseinrichtungen für Bergbaumaschinen, die den vorgenannten Anforderungen genügen sind elektrohydraulisch und elektropneumatisch betriebene Bremssysteme.

Die DE 10 2013 014 845 A1 offenbart eine Bremseinrichtung für Türen und Klappen, insbesondere eines Automobils, mit einem Gehäuse, welches von einer Bremsstange durchdrungen wird. Die Bremsstange wird in einer Klemmeinrichtung von zwei Bremsblöcken geklemmt, welche in Bremsblockhaltern gelagert sind, welche wiederum auf Tellerfedern aufgesattelt sind. Die Tellerfedern stützen sich im Gehäuse ab. Die Bremsblockhalter sind an Elektromagneten befestigt, welche, wenn elektrisch aktiviert, zu im Gehäuse fest verankerten Magnetgegenstücken oder fest verankerten Elektromagneten angezogen werden können. In diesem Fall wird die Klemmung der Bremsblöcke auf die Bremsstange im dem Maß verringert, in dem die Elektromagneten zu den Magnetgegenstücken bzw. fest verankerten Elektromagneten gezogen werden.

Die DE 11 2013 006 987 T5 offenbart eine Bremsvorrichtung für eine Aufzugshubmaschine. Jede Bremsvorrichtung weist einen fixierten Kern, bewegliche Kerne, an denen jeweils ein Bremsschuh befestigt ist, mehrere die beweglichen Kerne beaufschlagende Bremsfedern und elektromagnetische Spulen als Bremskraft-Lösevorrichtung auf. Die Bremsfedern beaufschlagen die beweglichen Kerne und bringen die Bremsschuhe mit einer Bremsfläche einer Bremstrommel in Kontakt. Wenn die elektromagnetischen Spulen bestromt werden, erzeugen sie elektromagnetische Kräfte und ziehen die beweglichen Kerne in Richtung des fixierten Kerns, wodurch die Bremsschuhe von der Bremsfläche getrennt und die Bremskraft aufgehoben wird. Wird der elektrische Stromfluss zu den elektromagnetischen Spulen unterbrochen, werden die Bremsschuhe mittels der Federkräfte der Bremsfedern gegen die Bremsfläche gedrückt.

Die JP 2004-189 418 A offenbart eine weitere Bremse für eine Aufzugshubmaschine. Die Bremse umfasst einen Elektromagneten mit einem Joch und einer Erregerspule, einen mit einem Bremsbelag und einer Führungsstange versehenen Anker, wobei die Führungsstange durch das Joch in Richtung einer Bremsfläche gleitend gelagert ist. Eine in dem Joch vorgesehene Bremsfeder drückt den Anker mit dem Bremsbelag in Richtung der Bremsfläche. Durch die elektromagnetische Anziehungskraft des bestromten Elektromagneten wird der Bremsbelag von der Bremsfläche getrennt, um die Bremse zu lösen.

Ausgehend von diesem Stand der Technik liegt der Erfindung die Aufgabe zugrunde, eine Bremseinrichtung für eine Bergbaumaschine der eingangs erwähnten Art zu schaffen, die rein elektrisch betreibbar ist und eine Umrüstung der Bremssysteme an vorhandenen Winden und Fördermaschinen ermöglicht.

Wie bei allen Bremseinrichtungen für Bergbaumaschinen üblich, werden einzelne Bremselemente paarweise an einem Bremsgestell, insbesondere einem Bremsständer, befestigt und wirken gleichzeitig und gegenläufig auf eine Bremsfläche, insbesondere eine Bremsscheibe. Dieser Aufbau ermöglicht eine einfache Anpassung der Bremselemente an den für die jeweilige Winde oder Fördermaschine geforderten Bremsscheibendurchmesser.

Die Aufgabe der Erfindung wird durch eine Bremseinrichtung mit den Merkmalen des Anspruchs 1 gelöst.

Die Bremslüftungsvorrichtung der Bremseinrichtung für eine Bergbaumaschine der eingangs erwähnten Art weist mindestens ein Magnetpaar mit zwei Magneten auf, wobei übereinstimmende Pole der zwei Magnete jedes Magnetpaares einander zugewandt sind und mindestens einer der zwei Magnete jedes Magnetpaares ein zeitweilig bestrombarer Elektromagnet ist, wobei sich im bestromten Zustand die Pole der beiden Magnete abstoßen und hierdurch die der Bremskraft entgegengesetzte Kraft zum Lüften des Bremsbelags erzeugen.

Die Bremslüftungsvorrichtung basiert auf dem Prinzip der magnetischen Abstoßung der übereinstimmenden Pole jedes Magnetpaares. In dem mindestens einer der beiden Magnete zeitweilig bestrombar ist und sich die Pole der beiden Magnete lediglich im bestromten Zustand abstoßen kann die der Bremskraft entgegengesetzte Kraft zum Lüften des Bremsbelages elektrisch erzeugt und gesteuert werden. Die erfindungsgemäße Bremseinrichtung benötigt neben der ohnehin erforderlichen elektrischen Steuerung keine Pneumatik- oder Hydraulikversorgung.

Grundsätzlich genügt die Abstoßung zwischen zwei Magneten. Um den Weg und die Kraft zum Lüften des Bremsbelages zu vergrößern sind jedoch vorzugsweise mehrere Magnetpaare vorgesehen. Grundsätzlich genügt es, wenn jedes Magnetpaar einen zeitweilig bestrombaren Elektromagneten und einen Permanentmagneten aufweist. Vorzugsweise sind jedoch sämtliche Magnete als Elektromagnete ausgestaltet.

In einer Ausgestaltung der Erfindung weist die Bremslüftungsvorrichtung zwei Magnetpaare auf, wobei zwei Magnete der beiden Magnetpaare einen Doppelmagneten bilden und unterschiedliche Pole der beiden Magnete des Doppelmagneten einander zugewandt sind. Aufgrund der unterschiedlichen Polarität ziehen sich die beiden Magnete des Doppelmagneten an und bilden eine Baueinheit. An den Doppelmagneten grenzen zwei Magnete an, deren Pole mit den nach außen weisenden Polen des Doppelmagneten übereinstimmen und sich daher bei Bestromung der Magnete von dem Doppelmagneten unter Ausbildung eines Luftspaltes wegbewegen.

Die Bestromung der Elektromagneten kann mit Gleich- oder Wechselspannung erfolgen.

In einer weiteren Ausgestaltung der Erfindung mit zwei Magnetpaaren ist der Doppelmagnet beispielsweise als Permanentmagnet ausgebildet, während die beiden angrenzenden Magnete elektrisch bestrombar sind und dadurch gezielt gemeinsam bzw. einzeln von dem Doppelmagneten durch Bestromung weg bewegbar sind.

Sämtliche Elektromagneten sind vorzugsweise als sogenannte Magnetspulen ausgebildet, d.h. ohne bewegte Anker oder andere Betätigungsmittel.

Eine konstruktiv vorteilhafte Ausgestaltung der Bremseinrichtung zur Einleitung der Bewegung und Kräfte der sich abstoßenden Magnete in die Komponenten wird dadurch erreicht, dass
- die Magnete in einem ersten gestellfesten Gehäuse des Bremselementes angeordnet sind,
- ein Flansch in dem ersten gestellfesten Gehäuse axial in Richtung der Bremsfläche und in entgegengesetzter Richtung bewegbar ist, wobei die Kraft zum Lüften des Bremsbelags in den Flansch eingeleitet wird,
- ein Federpaket die axial in Richtung der Bremsfläche wirkende Bremskraft auf den Bremsbelag erzeugt,
- das Federpaket in einem zweiten gestellfesten Gehäuse des Bremselementes angeordnet ist,
- das Federpaket auf einen Bremsbelagträger wirkt, der gegenüber dem zweiten gestellfesten Gehäuse axial in Richtung der Bremsfläche und in entgegengesetzter Richtung bewegbar ist und
- der Bremsbelagträger über eine Zugstange mit dem Flansch verbunden ist.

Wie bei Bremseinrichtungen für Bergbaumaschinen üblich wird die axial in Richtung der Bremsfläche wirkende Bremskraft durch ein Federpaket erzeugt. Mittels der Lüftungsvorrichtung wird die Bremskraft zeitweilig reduziert bzw. vollständig aufgehoben und die Bremsscheibe freigegeben. Hierzu werden die Elektromagnete jedes Magnetpaares bestromt, wodurch sich der Abstand zwischen den übereinstimmenden Polen der beiden Magnete jedes Magnetpaares vergrößert. Diese Abstandsvergrößerung bewirkt, dass eine Kraft in den Flansch in dem ersten gestellfesten Gehäuse eingeleitet wird, die entgegen der axial in Richtung der Bremsfläche wirkenden Bremskraft wirkt. Da der Flansch über eine Zugstange mit dem Bremsbelagträger verbunden ist, wird durch die Bestromung die Bremskraft auf den Bremsbelag reduziert bzw. vollständig aufgehoben.

Eine konstruktiv vorteilhafte und kompakte Bauform der Bremseinrichtung bei zugleich günstiger Anordnung der Zugstange wird dadurch erreicht, dass das erste gestellfeste Gehäuse und das zweite gestellfeste Gehäuse eine gemeinsame als Flansch ausgebildete Gehäusewand aufweisen, der Flansch einen Durchgang aufweist, durch den sich die Zugstange hindurch erstreckt.

Nachfolgend wird die Erfindung anhand der Zeichnungen näher erläutert. Es zeigen
- **Figur 1**: eine schematische Seitenansicht einer erfindungsgemäßen Bremseinrichtung,
- **Figur 2**: eine Darstellung eines Bremselementes der Bremseinrichtung nach Figur 1, wobei Figur 2a das aufliegende und Figur 2b das gelüftete Bremselement zeigt.

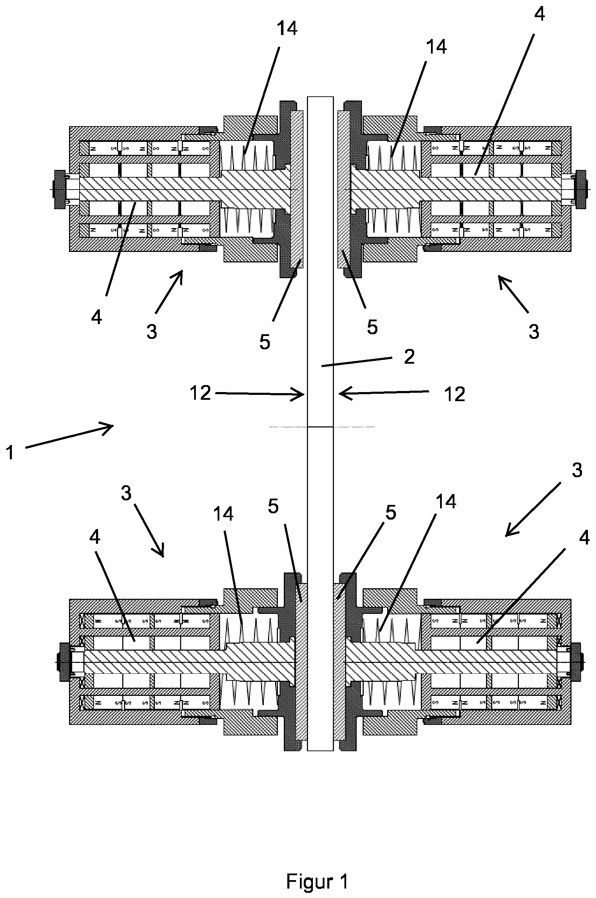

Figur 1 zeigt eine erfindungsgemäße Bremseinrichtung (1), die mindestens eine Bremsfläche (2) in Form einer Bremsscheibe, zwei paarweise an einem nicht dargestellten Bremsgestell befestigte Bremselemente (3) aufweist, die gleichzeitig auf die Bremsscheibe einwirken.

An jedem Bremselement (3) ist eine Belüftungsvorrichtung (4) angeordnet, die eine der axial in Richtung der Bremsfläche (2) wirkenden Bremskraft entgegengesetzte Kraft zum Lüften eines Bremsbelags (5) erzeugt.

Die Belüftungsvorrichtung (4) jedes Bremselementes (3) weist zwei Magnetpaare (6, 7) mit jeweils zwei Magnete (6.1, 6.2) bzw. (7.1, 7.2) auf. Jeder Magnet (6.1, 6.2, 7.1, 7.2) ist in dem dargestellten Ausführungsbeispiel als Magnetspule ausgebildet. Jeder Magnet (6.1, 6.2, 7.1, 7.2) weist zwei gegenüberliegende Pole, einen mit N gekennzeichneten Pol (9), den sogenannten Nordpol und einen mit S gekennzeichneten Pol (8), den sogenannten Südpol auf. Übereinstimmende Pole (8) des Magnetpaares (6.1,6.2) sowie die übereinstimmenden Pole (9) des Magnetpaares (7.1,7.2) sind einander zugewandt.

Die Magnete (6.2, 7.1) der beiden Magnetpaare (6, 7) bilden einen Doppelmagneten, wobei die unterschiedlichen Pole (8, 9) der beiden Magnete (6.2, 7.1) des Doppelmagneten einander zugewandt sind und sich bei Bestromung des Doppelmagneten anziehen, während die Magnete (6.1, 7.2) der Magnetpaare (6, 7) von dem Doppelmagneten abgestoßen werden.

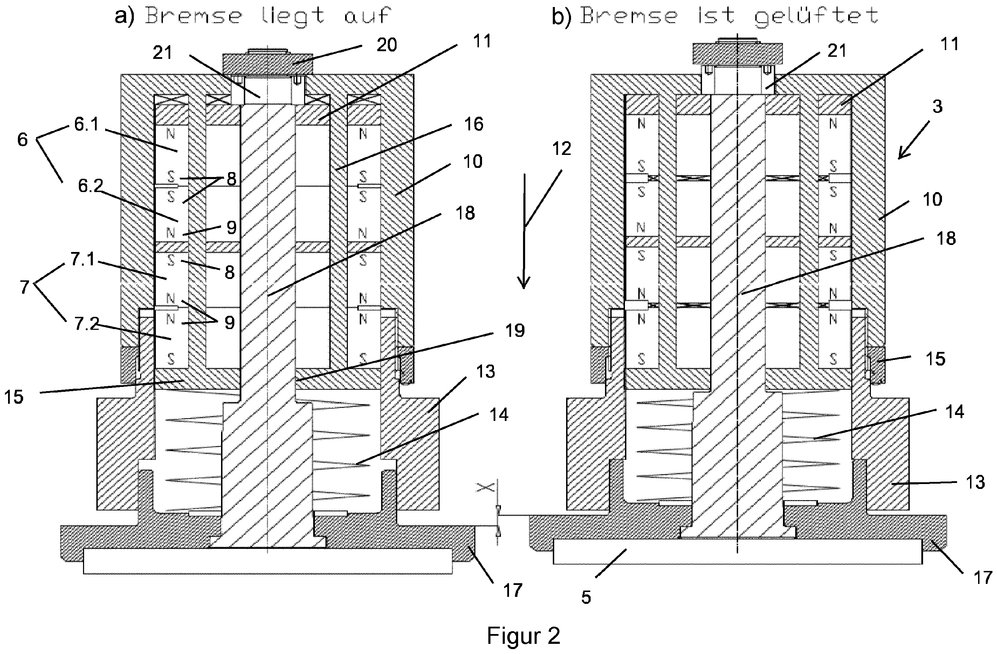

Wie insbesondere aus Figuren 2a, 2b erkennbar sind die Magnete (6.1, 6.2, 7.1, 7.2) beider Magnetpaare (6, 7) in einem ersten gestellfesten Gehäuse (10) des Bremselementes (3) angeordnet. In dem ersten gestellfesten Gehäuse (10) ist axial in Richtung (12) der Bremsscheibe und in entgegengesetzter Richtung ein Flansch (11) bewegbar.

An das erste gestellfeste Gehäuse (10) schließt sich ein zweites gestellfestes Gehäuse (13) an, in dem ein Federpaket (14) angeordnet ist, das die axial in Richtung (12) der Bremsfläche wirkende Bremskraft auf dem Bremsbelag (5) erzeugt.

Das erste gestellfeste Gehäuse (10) und das zweite gestellfeste Gehäuse (13) weisen eine gemeinsame als Flansch (15) ausgebildete Gehäusewand auf, die sich über Abstandsstangen (16) an der oberen Begrenzungswand des ersten Gehäuses (10) abstützt. Das Federpaket (14) stützt sich einerseits an dem Flansch (15) und andererseits an einem Bremsbelagträger (17) ab, der gegenüber dem zweiten gestellfesten Gehäuse (13) in Richtung (12) der Bremsfläche und in entgegengesetzter Richtung bewegbar ist. Der Bremsbelagträger (17) ist über eine Zugstange (18) mit dem Flansch (15) in dem ersten gestellfesten Gehäuse (10) verbunden. Die Zugstange erstreckt sich durch einen Durchgang (19) in dem Flansch (15).

Endseitig am Ende der Zugstange (18) sind Einstellmuttern (20, 21) angeordnet. Die Einstellmutter (20) ist wirksam, wenn die Bremse aufliegt, die Einstellmutter (21) ist wirksam, wenn die Bremse gelüftet ist. Die Einstellmutter (20) begrenzt die maximale Bewegung des Bremsbelagträgers (17) gegenüber dem gestellfesten ersten und zweiten Gehäuse (10, 13). Mit der Einstellmutter (21) können die Magnete (6.1, 6.2, 7.1, 7.2) in Achsrichtung eingestellt werden.

Nachfolgend wird die Arbeitsweise der erfindungsgemäßen Bremse anhand von Figuren 2a,2b näher erläutert:

Figur 2a zeigt die Bremseinrichtung (1) mit nicht bestromten Magneten (6.1, 6.2, 7.1, 7.2) der Bremslüftungsvorrichtung (4). Das Federpaket (14) ist ausgefedert und der Bremsbelagträger (17) mit daran befestigtem Bremsbelag (5) liegt auf der nicht dargestellten Bremsfläche (2) bzw. Bremsscheibe auf. Werden nun sämtliche Magnete (6.1, 6.2, 7.1, 7.2) der beiden Magnetpaare (6, 7) bestromt, stoßen sich die Magnete (6.1, 6.2) des Magnetpaares (6) und die Magnete (7.1, 7.2) des Magnetpaares (7) ab, sodass sich zwischen den übereinstimmenden Polen (8) bzw. (9) ein Luftspalt ausbildet, wie dies in Figur 2b dargestellt ist.

Hierdurch wird der Flansch (11) aus der in Figur 2a tieferen Position angehoben, bis der Flansch an der oberen Gehäusewand des ersten Gehäuses (10) anliegt, wie dies in Figur 2b dargestellt ist. Da der Flansch (11) über die Zugstange (18) mit dem Bremsbelagträger (17) verbunden ist, wird zugleich der an dem Bremsbelagträger (17) befestigte Bremsbelag (5) von der Bremsfläche (2) abgehoben und hierdurch die Bremse gelüftet.

Wird die Bestromung der Magnete (6.1, 6.2, 7.1, 7.2) der beiden Magnetpaare (6, 7) unterbrochen, kehrt die gelüftete Bremse in ihre aufliegende Position nach Figur 2a unter der Wirkung des Federpakets (14) zurück.

| **Nr.** | **Bezeichnung** |
|---|---|
| 1. | Bremseinrichtung |
| 2. | Bremsfläche |
| 3. | Bremselement |
| 4. | Belüftungsvorrichtung |
| 5. | Bremsbelag |
| 6. | Magnetpaar |
| 6.1 | Magnet |
| 6.2 | Magnet |
| 7. | Magnetpaar |
| 7.1 | Magnet |
| 7.2 | Magnet |
| 8. | Pol (S = Südpol) |
| 9. | Pol (N = Nordpol) |
| 10. | Erstes Gehäuse |
| 11. | Flansch |
| 12. | Richtung zur Bremsfläche |
| 13. | Zweites Gehäuse |
| 14. | Federpaket |
| 15. | Flansch |
| 16. | Abstandsstange |
| 17. | Bremsbelagträger |
| 18. | Zugstange |
| 19. | Durchgang |
| 20. | Einstellmutter |
| 21. | Einstellmutter |

## Patentansprüche

1. Bremseinrichtung (1) für eine Bergbaumaschine, umfassend
- mindestens eine Bremsfläche (2),
- mindestens zwei paarweise an einem Bremsgestell befestigte Bremselemente (3), die gleichzeitig auf die Bremsfläche (2) einwirken,
- eine an jedem Bremselement (3) angeordnete Bremslüftungsvorrichtung (4), wobei jedes Bremselement (3) eine axial in Richtung (12) der Bremsfläche (2) wirkende Bremskraft auf einen Bremsbelag (5) und jede Bremslüftungsvorrichtung (4) eine der Bremskraft entgegengesetzte Kraft zum Lüften des Bremsbelags (5) erzeugt, wobei
- die Bremslüftungsvorrichtung (4) mindestens ein Magnetpaar (6,7) mit zwei Magneten (6.1,6.2,7.1,7.2) aufweist,
- übereinstimmende Pole (8,9) der zwei Magnete (6.1,6.2,7.1,7.2) jedes Magnetpaars (6,7) einander zugewandt sind,
- mindestens einer der zwei Magnete (6.1,6.2,7.1,7.2) jedes Magnetpaares ein zeitweilig bestrombarer Elektromagnet ist, wobei sich im bestromten Zustand die Pole (8,9) der beiden Magnete (6.1,6.2,7.1,7.2)abstoßen und hierdurch die der Bremskraft entgegengesetzte Kraft zum Lüften des Bremsbelags (5) erzeugen.

2. Bremseinrichtung nach Anspruch 1, **dadurch gekennzeichnet, dass** die Bremslüftungsvorrichtung (4) zwei Magnetpaare (6,7) aufweist, wobei zwei Magnete (6.2,7.1) der beiden Magnetpaare (6,7) einen Doppelmagneten bilden und unterschiedliche Pole (8,9) der beiden Magnete (6.2,7.1) des Doppelmagneten einander zugewandt sind.

3. Bremseinrichtung nach Anspruch 1 oder 2, **dadurch gekennzeichnet, dass** der Doppelmagnet ein Permanentmagnet ist.

4. Bremseinrichtung nach Anspruch 1 oder 2, **dadurch gekennzeichnet, dass** sämtliche Magnete Elektromagnete sind.

5. Bremseinrichtung nach einem der Ansprüche 1 bis 4,
**dadurch gekennzeichnet, dass** sämtliche Elektromagnete als Magnetspulen ausgebildet sind.

6. Bremseinrichtung nach einem der Ansprüche 1 bis 5,
**dadurch gekennzeichnet, dass**
- die Magnete (6.1,6.2,7.1,7.2) in einem ersten gestellfesten Gehäuse (10) des Bremselementes (3) angeordnet sind,
- ein Flansch (11) in dem ersten gestellfesten Gehäuse (10) axial in Richtung (12) der Bremsfläche (2) und in entgegengesetzter Richtung bewegbar ist, wobei die Kraft zum Lüften des Bremsbelags (5) in den Flansch (11) eingeleitet wird,
- ein Federpaket (14) die axial in Richtung (12) der Bremsfläche (2) wirkende Bremskraft auf den Bremsbelag (5) erzeugt,
- das Federpaket (14) in einem zweiten gestellfesten Gehäuse (13) des Bremselementes (3) angeordnet ist,
- das Federpaket (14) auf einen Bremsbelagträger (17) wirkt, der gegenüber dem zweiten gestellfesten Gehäuse (13) axial in Richtung (12) der Bremsfläche (2) und in entgegengesetzter Richtung bewegbar ist und
- der Bremsbelagträger (17) über eine Zugstange (18) mit dem Flansch (11) verbunden ist.

7. Bremseinrichtung nach Anspruch 6, **dadurch gekennzeichnet, dass** das erste gestellfeste Gehäuse (10) und das zweite gestellfeste Gehäuse (13) eine gemeinsame als Flansch (15) ausgebildete Gehäusewand aufweisen, der Flansch (15) einen Durchgang (19) aufweist, durch den sich die Zugstange (18) hindurch erstreckt.

## Claims

1. Brake device (1) for a mining machine, comprising
- at least one braking surface (2),
- at least two brake elements (3) attached in pairs to a brake frame, which act simultaneously on the braking surface (2),
- a brake release device (4) arranged on each brake element (3), wherein each brake element (3) generates a braking force acting axially in the direction (12) of the braking surface (2) on a brake pad (5) and each brake release device (4) generates a force opposite to the braking force for releasing the brake pad (5),
- wherein the brake release device (4) comprises at least one magnet pair (6, 7) with two magnets (6.1, 6.2, 7.1, 7.2),
- matching poles (8, 9) of the two magnets (6.1, 6.2, 7.1, 7.2) of each magnet pair (6,7) are facing each other,
- at least one of the two magnets (6.1, 6.2, 7.1, 7.2) of each magnet pair is a temporarily energizable electromagnet, wherein in the energized state the poles (8, 9) of the two magnets (6.1, 6.2, 7.1, 7.2) repel and thereby generate the force opposite to the braking force to release the brake pad (5).

2. Brake device according to Claim 1, **characterized in that** the brake release device (4) comprises two pairs of magnets (6, 7), wherein two magnets (6.2, 7.1) of the two magnet pairs (6, 7) form a double magnet and opposite poles (8, 9) of the two magnets (6.2, 7.1) of the double magnet are facing each other.

3. Brake device according to Claim 1 or 2, **characterized in that** the double magnet is a permanent magnet.

4. Brake device according to Claim 1 or 2, **characterized in that** all the magnets are electromagnets.

5. Brake device according to one of Claims 1 to 4, **characterized in that** all the electromagnets are configured as magnetic coils.

6. Brake device according to one of Claims 1 to 5, **characterized in that**
- the magnets (6.1, 6.2, 7.1, 7.2) are arranged in a first frame-mounted housing (10) of the brake element (3),
- a flange (11) in the first frame-mounted housing (10) is movable axially in the direction (12) of the braking surface (2) and in the opposite direction, wherein the force to release the brake pad (5) is introduced into the flange (11),
- a spring package (14) generates the braking force acting axially in the direction (12) of the braking surface (2) on the brake pad (5),
- the spring package (14) is arranged in a second frame-mounted housing (13) of the brake element (3),
- the spring package (14) acts on a brake pad carrier (17) which is movable axially in the direction (12) of the braking surface (2) and in the opposite direction relative to the second frame-mounted housing (13), and
- the brake pad carrier (17) is connected to the flange (11) via a tie rod (18).

7. Brake device according to Claim 6, **characterized in that** the first frame-mounted housing (10) and the second frame-mounted housing (13) have a common housing wall configured as a flange (15), the flange (15) having a passage (19) through which the tie rod (18) extends.

## Revendications

1. Dispositif de freinage (1), destiné à une machine d'exploitation minière, comprenant
- au moins une surface de freinage (2),
- au moins deux éléments de freinage (3) fixés par paires sur un châssis de freinage, qui agissent simultanément sur la surface de freinage (2),
- un système de ventilation des freins (4) placé sur chaque élément de freinage (3), chaque élément de freinage (3) exerçant sur une garniture de frein (5) une force de freinage agissant axialement en direction (12) de la surface de freinage (2) et chaque système de ventilation des freins (4) exerçant une force opposée à la force de freinage, pour ventiler la garniture de frein (5),
- le système de ventilation des freins (4) comportant au moins une paire d'aimants (6, 7) avec deux aimants (6.1, 6.2, 7.1, 7.2),
- des pôles (8, 9) concordants des deux aimants (6.1, 6.2, 7.1, 7.2) de chaque paire d'aimants (6, 7) se faisant mutuellement face,
- au moins l'un des deux aimants (6.1, 6.2, 7.1, 7.2) de chaque paire d'aimants étant un électroaimant susceptible d'être temporairement alimenté en courant, à l'état d'alimentation en courant, les pôles (8, 9) des deux aimants (6.1, 6.2, 7.1, 7.2) se repoussant et exerçant à cet effet la force opposée à la force de freinage, pour ventiler la garniture de frein (5).

2. Dispositif de freinage selon la revendication 1, **caractérisé en ce que** le système de ventilation des freins (4) comporte deux paires d'aimants (6, 7), deux aimants (6.2, 7.1) des deux paires d'aimants (6, 7) constituant un double-aimant et des pôles (8, 9) différents des deux aimants (6.2, 7.1) du double-aimant se faisant mutuellement face.

3. Dispositif de freinage selon la revendication 1 ou 2, **caractérisé en ce que** le double-aimant est un aimant permanent.

4. Dispositif de freinage selon la revendication 1 ou 2, **caractérisé en ce que** tous les aimants sont des électroaimants.

5. Dispositif de freinage selon l'une quelconque des revendications 1 à 4, **caractérisé en ce que** tous les électroaimants sont conçus sous la forme de bobines magnétiques.

6. Dispositif de freinage selon l'une quelconque des revendications 1 à 5, **caractérisé en ce que**
- les aimants (6.1, 6.2, 7.1, 7.2) sont placés dans un premier boîtier (10) fixe sur le châssis de l'élément de freinage (3),
- une bride (11) est déplaçable dans le premier boîtier (10) fixe sur le châssis, axialement en direction (12) de la surface de freinage (2) et dans la direction opposée, la force destinée à ventiler la garniture de frein (5) étant introduite dans la bride (11),
- un ensemble de ressorts (14) exerce sur la garniture de frein (5) la force de freinage agissant axialement en direction (12) de la surface de freinage (2),
- l'ensemble de ressorts (14) est placé dans un deuxième boîtier (13) fixe sur le châssis de l'élément de freinage (3),
- l'ensemble de ressorts (14) agit sur un support (17) de garniture de frein, qui est déplaçable au regard du deuxième boîtier (13) fixe sur le châssis, axialement en direction (12) de la surface de freinage (2) et dans la direction opposée et
- le support (17) de garniture de frein est relié par l'intermédiaire d'une bielle (18) avec la bride (11).

7. Dispositif de freinage selon la revendication 6, **caractérisé en ce que** le premier boîtier (10) fixe sur le châssis et le deuxième boîtier (13) fixe sur le boîtier comportent une paroi de boîtier commune, conçue sous la forme d'une bride (15), la bride (15) comporte un passage (19) à travers lequel s'étend la bielle (18).
